Europäisches Patentamt

European Patent Office

Office européen des brevets

(11) Numéro de publication: **0 289 405**

**A1**

## DEMANDE DE BREVET EUROPEEN

(21) Numéro de dépôt: **88400990.3**

(22) Date de dépôt: **22.04.88**

(51) Int. Cl.⁴: **B 60 H 1/00**

(30) Priorité: **27.04.87 FR 8705933**

(43) Date de publication de la demande:
**02.11.88 Bulletin 88/44**

(84) Etats contractants désignés: **DE ES GB IT**

(71) Demandeur: **VALEO
64 Avenue de la Grande Armée
F-75017 Paris (FR)**

(72) Inventeur: **Bouvot, Jean-François
2, rue des Grands Prés Le Mesnil Sévin
F-78720 Dampierre (FR)**

(54) **Dispositif de chauffage et de ventilation, notamment pour l'habitacle d'un véhicule automobile.**

(57) Dispositif de chauffage et de ventilation comprenant deux moitiés (10 ; 10') séparées généralement symétriques comportant chacune une conduite d'air frais (12 ; 12'), des conduites de sortie d'air (14, 16, 18 ; 14', 16', 18'), une branche de transmission d'air frais (34 ; 34') interposée entre la conduite d'entrée et les conduites de sortie, une branche de réchauffage d'air (36 ; 36') interposée entre la conduite d'entrée et les conduites de sortie et au moins un volet de mixage (44 ; 44') diposé à la jonction de la conduite d'entrée (12 ; 12') et des branches de transmission d'air frais (34 ; 34') et de réchauffage d'air (36 ; 36'). Les branches de réchauffage d'air sont réunies pour constituer une seule et même conduite (38) qui contient un échangeur de chaleur (40) propre à assurer le chauffage de l'air sortant par les conduites de sortie de l'une et/ou l'autre des deux moitiés.

FIG.1

EP 0 289 405 A1

## Description

### Dispositif de chauffage et de ventilation, notamment pour l'habitacle d'un véhicule automobile

L'invention concerne un dispositif de chauffage et de ventilation comprenant deux moitiés ou parties séparées, généralement symétriques, destinées à assurer le chauffage et la ventilation de deux zones différentes, par exemple des deux places avant de l'habitacle d'un véhicule automobile.

On connaît déjà des dispositifs de ce genre, dans lesquels chacune des deux moitiés comporte une conduite d'entrée d'air frais, des conduites de sortie d'air, une branche de transmission d'air frais interposée entre la conduite d'entrée et les conduites de sortie, une branche de réchauffage d'air interposée entre la conduite d'entrée et les conduites de sortie et contenant un échangeur de chaleur, ainsi qu'au moins un volet de mixage disposé à la jonction de la conduite d'entrée et des branches de transmission d'air frais et de réchauffage d'air pour faire varier la répartition entre ces deux branches du débit d'air arrivant par la conduite d'entrée et, par conséquent, la température de l'air sortant par les conduites de sortie.

Dans ces dispositifs connus, les deux volets de mixage peuvent être commandés indépendamment l'un de l'autre et amenés dans des positions différentes, ce qui permet de régler séparément la température de l'air sortant par les conduites de sortie des deux moitiés.

Ainsi, dans le cas où un dispositif de ce genre est implanté dans un véhicule automobile, il est possible d'assurer un réglage séparé de la température de l'air sortant respectivement aux deux places avant de l'habitacle.

Habituellement, les conduites de sortie de chacune des moitiés sont au nombre de trois et débouchent respectivement vers une bouche d'aération au niveau du tableau de bord, vers une bouche de dégivrage/désembuage du pare-brise et vers une bouche en partie basse de l'habitacle. Des volets de distribution sont alors prévus pour assurer la distribution de l'air frais ou réchauffé vers une ou plusieurs des conduites de sortie en fonction du mode de chauffage ou de ventilation souhaité. Toutefois, dans ce cas les volets de distribution d'une moitié sont toujours synchronisés au volet de distribution de l'autre moitié, même dans le cas où les deux volets de mixage sont à commandes séparées.

Dans les dispositifs connus de ce genre, les deux moitiés se comportent comme deux dispositifs quasi indépendants et les différentes conduites et branches d'une moitié sont totalement séparées des conduites et branches correspondantes de l'autre moitié.

Généralement ces deux moitiés sont formées dans un même boîtier de forme générale symétrique par rapport à un plan médian et la séparation de ces deux moitiés est obtenue, au moins en partie, par une cloison interne du boîtier qui s'étend dans son plan médian de symétrie.

En particulier, dans les dispositifs connus de ce genre, cette cloison interne sépare les deux branches de réchauffage d'air, chacune d'elles contenant son propre échangeur de chaleur ou une moitié d'un échangeur de chaleur divisé en deux par cette cloison, ledit échangeur étant séparé en deux parties égales par une plaque isolante disposée dans le faisceau de l'échangeur de chaleur. Dans l'un ou l'autre cas, tout se passe comme si on avait deux échangeurs de chaleur séparés, chacun d'eux étant généralement consitué par un radiateur parcouru par un fluide chaud, par exemple de l'eau chaude ayant servi au refroidissement au moteur du véhicule.

La séparation des deux branches de réchauffage d'air entraîne certains inconvénients.

Tout d'abord, il faut prévoir une cloison interne qui s'étend en particulier entre les deux branches de réchauffage d'air, ce qui exige des moules de forme complexe pour la réalisation du boîtier du dispositif, ce boîtier étant formé généralement de plusieurs pièces moulées en matière plastique.

En outre, lorsque l'une des moitiés du dispositif fonctionne en mode chauffage alors que l'autre moitié ne le fait pas, seule la branche de réchauffage d'air de la première moitié est traversée par un débit d'air. Par conséquent, c'est seulement l'échangeur de chaleur ou la moitié de l'échangeur de chaleur affectée à cette moitié qui sert au réchauffage de l'air, l'autre échangeur de chaleur ou l'autre moitié d'échangeur de chaleur étant inutilisée, ce qui entraîne des pertes de charges.

Cet inconvénient existe aussi lorsque les débits d'air traversant les deux branches de réchauffage d'air sont sensiblement différents l'un de l'autre.

L'invention vise notamment à éviter les inconvénients précités des dispositifs connus.

Elle propose, à cet effet, un dispositif de chauffage et de ventilation du type défini en introduction, dans lequel les deux branches de réchauffage d'air sont réunies pour constituer une seule et même conduite de réchauffage d'air qui communique respectivement avec les deux branches de transmission d'air frais et dans lequel un seul échangeur de chaleur est logé dans la conduite de réchauffage d'air pour assurer le chauffage de l'air sortant par les conduites de sortie de l'une et/ou l'autre des deux moitiés.

Ainsi, conformément à l'invention, il n'existe aucune séparation entre les deux branches de réchauffage d'air, ce qui a notamment pour avantage de pouvoir réaliser le boîtier du dispositif avec des moules de forme plus simple et de simplifier également le démoulage des pièces formant le boîtier.

En outre, du fait que l'on utilise un seul échangeur de chaleur qui s'étend dans la conduite réunissant les deux branches de réchauffage qui sont alors confondues, on utilise toujours en totalité la surface d'échange de cette échangeur de chaleur, meme si seulement l'une des moitiés du dispositif fonctionne en mode chauffage. De plus le montage de celui-ci est facilité, car il n'y a pas à le faire glisser, en aveugle, dans la paroi séparatrice.

Il en résulte également que l'on peut ainsi utiliser un échangeur de chaleur de plus faible dimension.

Selon une autre caractéristique de l'invention, le dispositif comprend une cloison médiane de séparation pour séparer les deux branches de transmission d'air frais.

Avantageusement, la conduite de réchauffage d'air a une forme générale en U et les deux branches de transmission d'air frais s'étendent entre les deux extrémités du U qui forment respectivement une section d'entrée et une section de sortie en communication avec les deux branches de transmission d'air frais.

Selon une autres caractéristique de l'invention, la cloison de séparation précitée s'étend jusqu'à la section d'entrée et jusqu'à la section de sortie de la conduite de réchauffage d'air.

Avantageusement, cette cloison de séparation sépare également l'une au moins des conduites de sortie d'une moitié de l'une au moins des conduites de sortie correspondante de l'autre moitié.

Ainsi, dans le cas où chaque moitié comporte trois conduites de sortie qui débouchent respectivement vers une bouche d'aération au niveau du tableau de bord d'un véhicule automobile, vers une bouche de désembuage/dégivrage du pare-brise et vers une bouche de sortie en partie inférieure de l'habitacle, cette cloison de séparation peut séparer également les deux conduites de sortie débouchant vers les bouches d'aération.

Selon une autre caractéristique de l'invention, cette cloison médiane de séparation assure également la séparation de deux conduites intermédiaires dont chacune est en communication avec les deux autres conduites de sortie.

Dans la description qui suit, faite seulement à titre d'exemple, on se réfère aux dessins annexés, sur lesquels :

- la figure 1 est une représentation schématique d'un dispositif de chauffage et de ventilation selon l'invention ;
- la figure 2 est une vue latérale d'un dispositif selon l'invention dont la paroi latérale a été enlevée pour faciliter la compréhension ;
- la figure 3 est une vue de dessus d'une partie du dispositif de la figure 2.
- la figure 4 est une vue partielle de côté du dispositif de la figure 2 montrant plus particulièrement la cloison de séparation.

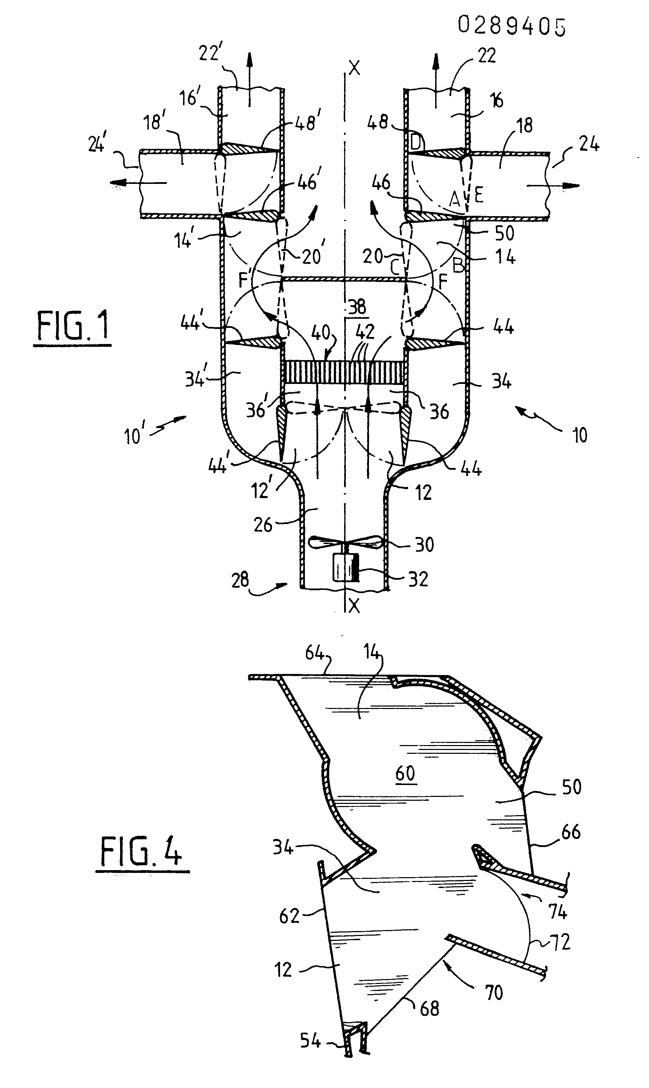

Le dispositif représenté schématiquement à la figure 1 est destiné au chauffage et à la ventilation de l'habitacle d'un véhicule automobile. Il comprend deux moitiés séparées 10 et 10' généralement symétriques par rapport à un plan médian XX qui, lorsque le dispositif est implanté dans un véhicule automobile, se situe habituellement en position verticale et dans l'axe longitudinal du véhicule.

La moitié 10 comprend une conduite d'entrée d'air frais 12 pour amener de l'air frais en provenance de l'extérieur de l'habitacle ou éventuellement d'un groupe de climatisation, ainsi que trois conduites de sortie d'air 14, 16 et 18 pour envoyer de l'air dans différentes parties de l'habitacle. La conduite 14 dessert une bouche d'aération 20 au niveau de la planche de bord du véhicule. La conduite 16 dessert une bouche de dégivrage/désembuage 22 du pare-brise du véhicule et la conduite 18 dessert une bouche de sortie 24 située en partie inférieure de l'habitacle du véhicule. La moitié 10' comprend, de façon correspondante, une conduite d'entrée 12' et trois conduites de sortie 14', 16' et 18' qui desservent res pectivement des bouches 20', 22' et 24'. La moitié 10' est affectée au chauffage et à la ventilation d'une des deux places avant de l'habitacle, par exemple celle du passager, et la moitié 10 est affectée au chauffage et à la ventilation de l'autre place avant de l'habitacle, par exemple celle du conducteur.

Les conduites d'entrée 12 et 12' sont montées à la sortie 26 d'un groupe moto-ventilateur 28 comprenant un ventilateur 30 entraîné en rotation par l'intermédiaire d'un moteur 32, des moyens de commande étant prévus, de manière classique, au tableau de bord du véhicule pour régler la vitesse de rotation du ventilateur.

La moitié 10 comprend en outre une branche de transmission d'air frais 34, interposée entre la conduite d'entrée 12 et les conduites de sorties 14, 16 et 18. De façon correspondante, la moitié 10' comprend une branche de transmission d'air frais 34' qui constitue la réplique symétrique de la branche de transmission d'air frais 34.

En outre, les moitiés 10 et 10' comprennent respectivement des branches de réchauffage 36 et 36', la branche 36 étant interposée entre la conduite d'entrée 12 et les conduites de sorties 14, 16 et 18 et la branche 36' étant interposée entre la conduite d'entrée 12' et les conduites de sorties 14', 16' et 18'. Dans le dispositif de la figure 1, la branche d'entrée 12 est séparée de la branche d'entrée 12', les branches de sortie 14, 16 et 18 sont séparées des branches de sortie 14', 16' et 18' et la branche de transmission d'air frais 34 est également séparée de la branche de transmission d'air frais 34'.

En revanche, conformément à l'invention, les deux branches de réchauffage d'air 36 et 36', au lieu d'être séparées comme dans la technique antérieure, sont réunies pour constituer une seule et même conduite de réchauffage d'air 38 qui communique respectivement avec les deux branches de transmission d'air frais 34 et 34'.

Un échangeur de chaleur 40 est logé dans la conduite de réchauffage d'air 38 de manière à assurer le chauffage de l'air sortant par les conduites de sortie de l'une et ou l'autre des deux moitiés 10 et 10'. Cet échangeur de chaleur est avantageusement constitué par un radiateur parcouru par le fluide chaud ayant servi au refroidissement du moteur du véhicule automobile. Dans l'exemple, l'échangeur 40 est un radiateur à ailettes qui est logé transversalement dans la conduite de réchauffage d'air 38 et qui s'étend sur toute la section de cette conduite, cette section étant de préférence de forme générale rectangulaire. Les ailettes 42 de l'échangeur 40 s'étendent parallèlement au plan XX de manière à introduire le minimum de perte de charge dans le flux d'air qui s'écoule par la conduite 38.

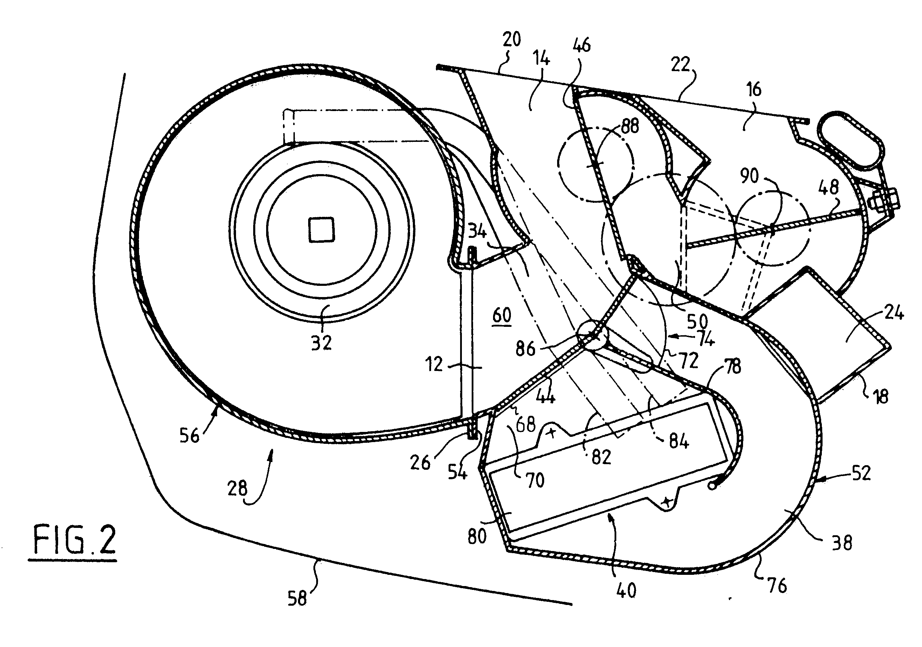

La moitié 10 comprend en outre un volet de mixage 44 disposé à la jonction de la conduite d'entrée 12 et des branches de transmission d'air frais 34 et de réchauffage d'air 36 pour pouvoir faire varier la répartition entre ces deux branches du débit d'air arrivant par la conduite d'entrée 12 et, par conséquent, la température de l'air sortant par les conduites de sortie. Dans le mode de réalisation de la figure 1, le volet de mixage 44 a été représenté en deux parties bien que, dans la pratique, on utilise généralement un volet en une seule partie, comme montré d'ailleurs dans la figure 2.

La moitié 10' comprend un volet de mixage 44' analogue au volet de mixage 44 décrit précédemment.

Les volets de mixage 44 et 44' sont à commandes indépendantes pour permettre de régler séparément la température de l'air sortant respectivement par les conduites de sorties de la moitié 10 et par les conduites de sortie de la moitié 10'. Dans la position représentée sur la figure 1, les volets 44 et 44' sont dans la même position et permettent à l'air arrivant par les conduites d'entrée 12 et 12' de passer uniquement à travers la conduite de réchauffage d'air 38 et par conséquent d'être réchauffé par l'échangeur de chaleur 40. Les volets 44 et 44' peuvent pivoter entre une position extrême où ils sont représentés en trait plein et une autre position extrême où ils sont représentés en trait interrompu. Dans cette dernière position, les volets 44 et 44' permettent à l'air de passer uniquement à travers les branches de transmission d'air frais 34 et 34'. Les volets 44 et 44' peuvent prendre en outre des positions intermédaires entre ces deux positions extrêmes.

En outre, la moitié 10 comprend des volets de distribution 46 et 48 et la moitié 10' des volets de distribution correspondants 46' et 48'. Le volet 46 est propre à régler la distribution entre la conduite 14 d'une part et une conduite intermédiaire 50 qui communique ensuite avec les deux autres conduites de sortie 16 et 18. Quant au volet 48, il sert à régler la distribution entre les conduites de sortie 16 et 18. De façon correspondante, la branche 10' comprend des volets 46' et 48', le volet 46' servant à régler la distribution entre la conduite 14' d'une part et les conduites 16' et 18' d'autre part. Les volets 46, 46', 48 et 48' peuvent pivoter entre une position extrême représentée en trait plein et une autre position extrême représentée en trait interrompu. Dans la position de la figure 1, les volets 46 et 46' interdisent l'accès de l'air aux conduites 50 et 50', l'air ne pouvant sortir que par les conduites 14 et 14' comme représenté par les flèches F et F'.

Les volets 46 et 46' sont synchronisés et, de même, les volets 48 et 48' sont synchronisés si bien que la distribution de l'air par les conduites de sortie de la moitié 10 est identique à la distribution de l'air par les conduites de sortie de l'autre moitié 10'.

De plus, le synchronisme des volets 46, 48 et 46', 48' est tel que celui-ci interdit la distribution de l'air par les trois conduites de sorties simultanément.

Les volets de distribution peuvent prendre différentes positions : une position A (figure 1) dans laquelle l'air s'écoule par les bouches d'aération 20 et 20', une position B dans laquelle l'air s'écoule par les bouches d'aération 20 et 20' et par les bouches 24 et 24', une position C dans laquelle l'air s'écoule uniquement par les bouches 24 et 24', une position D dans laquelle l'air s'écoule par les bouches de dégivrage/désembuage 22 et 22' et par les bouches 24 et 24' et une position E dans laquelle l'air s'écoule uniquement par les bouches 22 et 22'.

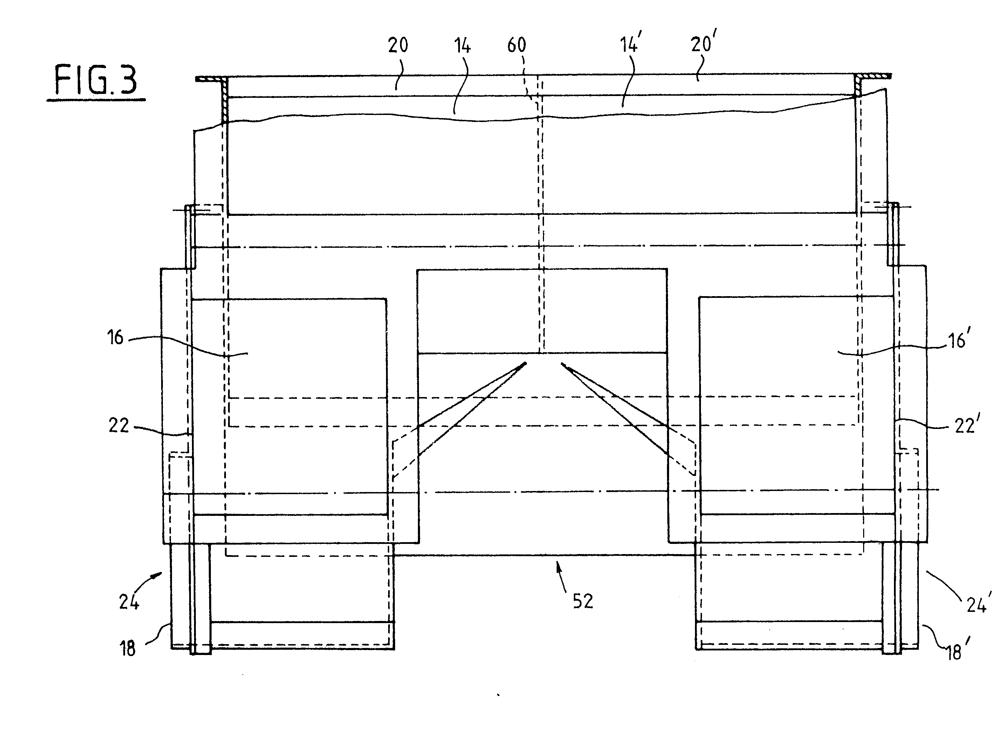

On se réfère maintenant aux figures 2 et 3 dans lesquelles les différentes parties du dispositif sont désignées sous les mêmes références numériques que dans la figure 1. Les deux moitiés 10 et 10' du dispositif sont formées dans un boîtier 52 en matière plastique moulé qui comprend un embout d'entrée 54 de forme générale rectangulaire qui est relié à l'embout de sortie 26 de forme correspondante d'un boîtier 56 en matière plastique moulé qui fait partie du groupe moto-ventilateur 28. Les boîtiers 52 et 56 sont logés dans le compartiment moteur du véhicule, tout en étant séparés du moteur par une tôle de protection 58.

L'embout d'entrée 54 du boîtier 52 est partagé en deux par une cloison de séparation 60 qui s'étend dans le plan XX (figure 1) c'est-à-dire parallèlement au plan de la feuille de la figure 2. L'embout d'entrée 54 définit ainsi, à l'intérieur du boîtier 52, les deux conduites d'entrée 12 et 12' du dispositif.

La cloison de séparation 60 a la forme générale représentée sur la figure 4. Cette cloison assure la séparation, non seulement des deux embouts d'entrée 12 et 12', mais également des deux branches de transmission d'air frais 34 et 34' et aussi des deux conduites de sortie 14 et 14'. Par ailleurs, cette cloison de séparation assure également la séparation des deux conduites intermédiaires 50 et 50' qui sont respectivement en communication avec les conduites de sortie 16 et 18 d'une part et les conduites de sortie 16' et 18' d'autre part.

La cloison 60 est limitée latéralement par des parois du boîtier dirigées perpendiculairement au plan XX. Cette paroi présente un bord 62 qui s'étend dans le plan de l'embout d'entrée 54, un bord 64 qui s'étend dans le plan des bouches d'aération 20 et 20' et un bord 66 qui s'étend dans le plan de sortie des conduites intermédiaires 50 et 50'. Cette cloison de séparation 60 présente en outre un bord 68 qui s'étend dans le plan de la section d'entrée 70 de la conduite de réchauffage d'air 38 et plus particulièrement au-delà de celle-ci afin d'inclure l'épaisseur du volet 44 et un autre bord 72 qui s'étend dans le plan de la section de sortie 74 de la conduite 38 et plus particulièrement au-delà de celle-ci de façon à englober le débattement du volet 44 et à assurer de cette manière la séparation quelle que soit la position du volet. Le conduit 38 a une forme générale en U limitée extérieurement par une paroi 76 à génératrice parallèle qui s'étend sur toute la largeur du boîtier et intérieurement par une cloison transversale 78 qui s'étend également sur toute la largeur du boîtier. Les deux extrémités du U forment respectivement la section d'entrée 70 et la section de sortie 74 de la conduite 38. Les deux branches de transmission d'air frais 34 et 34', qui sont séparées par la cloison 60, s'étendent entre les deux extrémités du U qui forment les sections d'entrée et de sortie précitées, ces sections étant en communication avec les deux branches 34 et 34'.

L'échangeur de chaleur 40 est logé transversalement dans la conduite 38 et immédiatement en aval de la section d'entrée 70 par rapport au sens de circulation de l'air dans la conduite 38. Sur la figure 2, on aperçoit l'une des boîtes à eau 80 de l'échangeur ainsi que la tubulure d'entrée 82 et la tubulure de sortie 84 qui sont raccordées à la boîte à eau.

Le volet de mixage 44 disposé à la jonction de la conduite d'entrée 12, de la branche de transmission d'air frais 34 et de la conduite de réchauffage d'air 38 est montée pivotant autour d'un axe 86. Dans la position représentée à la figure 2, ce volet assure la fermeture des sections d'entrée 70 et de sortie 74 et oblige ainsi l'air introduit par la conduite d'entrée 12 de passer directement par la branche 34 et, de là, vers les conduites de sortie 14, 16 et 18.

Le volet de mixage 44' affecté à l'autre moitié du dispositif peut prendre la même position ou une position différente. La répartition de l'air entre les trois conduites de sortie est assurée par les volets de distribution 46 et 48 qui sont montés à rotation respectivement autour d'un axe 88 et d'un axe 90. Dans la position représentée à la figure 2, le volet 88 ferme l'accès à la conduite de sortie 50 et l'air ne peut s'échapper que par la bouche d'aération 20 de la conduite de sortie 14.

Les volets de distribution 46' et 48' de l'autre moitié du dispositif sont dans la même position en sorte que, dans l'autre moitié, l'air s'échappe seulement par la bouche d'aération 20'. Les bouches 20 et 20' ont une section générale rectangulaire, comme montré à la figure 3 et sont séparées par la cloison 60.

En revanche, comme montré à la figure 3, les conduites de sortie 16 et 16' sont totalement séparées l'une de l'autre et les bouches 22 et 22' qu'elles desservent sont également séparées l'une de l'autre, ces deux bouches ayant une section générale rectangulaire.

Les conduites de sortie 18 et 18' sont également totalement séparées l'une de l'autre et ont une section rectangulaire, ces conduites étant délimitées par des parois s'étendant perpendiculairement au plan de séparation XX.

Etant donné que les deux branches de réchauffage d'air sont réunies dans une même conduite 38 qui s'étend sur toute la largeur du boîtier et que l'échangeur 40 s'étend également sur toute cette largeur, on utilise toujours la capacité d'échange totale de cet échangeur, même si les volets 44 et 44' prennent des positions extrêmes différentes.

En outre la limitation de la cloison 60 dans le plan de l'embout 54 peut être déplacée jusqu'à l'axe d'articulation du volet 44 et plus particulièrement à l'embout d'entrée de la conduite 14.

## Revendications

1. Dispositif de chauffage et de ventilation, notamment pour véhicule automobile, du type comprenant deux moitiés (10 ; 10') séparées, généralement symétriques, comportant chacune une conduite d'entrée d'air frais (12 ; 12'), des conduites de sortie d'air (14, 16, 18 ; 14', 16', 18'), une branche de transmission d'air frais (34 ; 34') interposée entre la conduite d'entrée et les conduites de sorties, une branche de réchauffage d'air (36 ; 36') interposée entre la conduite d'entrée et les conduites de sortie et contenant un échangeur de chaleur (40), ainsi qu'au moins un volet de mixage (44 ; 44') disposé à la jonction de la conduite d'entrée (12 ; 12') et des branches de transmission d'air frais (34 ; 34') et de réchauffage d'air (36 ; 36') pour faire varier la répartition entre ces deux branches du débit d'air arrivant par la conduite d'entrée et par conséquent la température de l'air sortant par les conduites de sortie, caractérisé en ce que les deux branches de réchauffage d'air (36 ; 36') sont réunies pour constituer une seule et même conduite de réchauffage d'air (38) qui communique respectivement avec les deux branches de transmission d'air frais (34 ; 34') et en ce qu'un seul échangeur de chaleur (40) est logé dans la conduite de réchauffage d'air (38) pour assurer le chauffage de l'air sortant par les conduites de sortie de l'une et/ou l'autre des deux moitiés (10 ; 10').

2. Dispositif selon la revendication 1, caractérisé en ce qu'il comprend une cloison médiane de séparation (60) pour séparer les deux branches de transmission d'air frais (34 ; 34').

3. Dispositif selon la revendication 2, caractérisé en ce que la conduite de réchauffage d'air (38) a une forme générale en U et en ce que les deux branches de transmission d'air frais s'étendent entre les deux extrémités du U qui forment respectivement une section d'entrée (70) et une section de sortie (74) en communication avec les deux branches de transmission d'air frais (34 ; 34').

4. Dispositif selon les revendications 2 et 3, caractérisé en ce que la cloison de séparation (60) s'étend jusqu'au delà la section d'entrée (70) et jusqu'au delà la section de sortie (72) de la conduite de réchauffage d'air (38).

5. Dispositif selon l'une des revendications 2 à 4, caractérisé en ce que la cloison de séparation (60) sépare également l'une au moins des conduites de sortie (12) d'une moitié de l'une au moins des conduites de sortie (14) d'une moitié de l'une au moins des conduites de sortie (14') de l'autre moitié.

6. Dispositif selon la revendication 5, dans lequel chaque moitié comporte trois conduites de sortie (14, 16, 18 ; 14', 16', 18') qui débouchent respectivement vers une bouche d'aération (20 ; 20') au niveau du tableau de bord d'un véhicule automobile, vers une bouche de dégivrage/désembuage (22 ; 22') du pare-brise et vers une bouche de sortie (24 ; 24') en partie inférieure de l'habitacle, caractérisé en ce que la cloison de séparation (60) sépare également les deux conduites de sortie (14 ; 14') débouchant vers les bouches d'aération (20 ; 20').

7. Dispositif selon la revendication 6, caractérisé en ce que la cloison de séparation (60) assure également la séparation de deux conduites intermédiaires (50 ; 50′) dont chacune est en communication avec les deux autres conduites de sortie (16, 18 ; 16′, 18′).

8. Dispositif selon la revendication 7, caractérisé en ce que les deux autres conduites de sortie (16, 18) d'une moitié sont séparées et à distance des deux autres conduites de sortie (16′ ; 18′) de l'autre moitié.

FIG.1

FIG.4

0289405

FIG.2

FIG.3

0289405

**Office européen des brevets**

# RAPPORT DE RECHERCHE EUROPEENNE

Numero de la demande

EP 88 40 0990

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-3 107 324 (SAAB-SCANIA)<br>* Figures 1-4; abrégé; page 5, lignes 16-23; page 6, ligne 32 - page 7, ligne 28; page 11, lignes 6-28 *<br>--- | 1-3,5-7 | B 60 H 1/00 |
| Y | DE-A-2 757 651 (AUDI)<br>* Figures 2,3; page 4, ligne 1 - page 5, ligne 5; page 6, ligne 15 - page 7, ligne 9 *<br>----- | 1-3,5-7 | |

| | DOMAINES TECHNIQUES RECHERCHES (Int. Cl.4) |
|---|---|
| | B 60 H |

**Le présent rapport a été établi pour toutes les revendications**

| Lieu de la recherche | Date d'achèvement de la recherche | Examinateur |
|---|---|---|
| LA HAYE | 03-08-1988 | TORSIUS A. |